# FASCICULE DE BREVET EUROPEEN

(11) **EP 1 237 826 B1**
(45) Date de publication et mention de la délivrance du brevet: **02.06.2004**
(21) Numéro de dépôt: 00974614.0
(22) Date de dépôt: 31.10.2000
(51) Int. Cl.: C04B 20/06, C04B 14/10, B28B 1/50, B28B 11/24

(54) **PROCEDE DE FABRICATION DE GRANULES D'ARGILE EXPANSEE ET LES GRANULES OBTENUS PAR LA MISE EN OEUVRE DE CE PROCEDE**
VERFAHREN ZUR HERSTELLUNG VON BLÄHTONGRANULAT UND DARAUS HERGESTELLTE GRANULATE
METHOD FOR MAKING EXPANDED CLAY GRANULES AND RESULTING GRANULES

(30) Priorité: 10.11.1999 FR 9914398
(43) Date de publication de la demande: 11.09.2002
(73) Titulaire: Entema, 13008 Marseille (FR)
(72) Inventeur: Vandenbussche, Frédéric, 13008 Marseille (FR); Bessiron, Nathalie, 13009 Marseille (FR)
(74) Mandataire: Marek, Pierre
(86) Numéro de dépôt international: PCT/FR2000/003034
(87) Numéro de publication internationale: WO 2001/034533

(56) Documents cités:
- DE-A- 2 548 387
- FR-A- 2 101 602
- DATABASE WPI Section Ch, Week 198237 Derwent Publications Ltd., London, GB; Class L02, AN 1982-78436E XP002142185 & SU 881 064 A (KERAMZITE RES INST), 15 novembre 1981 (1981-11-15)
- P.CORMON: "Bétons Légers d'aujourd'hui" 1973 , DITIONS EYROLLES , PARIS, FR XP002142182 page 52; tableau 2.3
- DATABASE WPI Section Ch, Week 197635 Derwent Publications Ltd., London, GB; Class L02, AN 1976-65399X XP002142184 & JP 50 044217 A (EIDAI CO LTD), 21 avril 1975 (1975-04-21)
- CHEMICAL ABSTRACTS, vol. 105, no. 9, 1 septembre 1986 (1986-09-01) Columbus, Ohio, US; abstract no. 77941, MCCALLISTER , D.L.: "Microwave drying of clays for x-ray diffraction analysis" XP002142183 & SOIL SCI. SOC. AM. J., vol. 50, no. 3, 1986, pages 807-809,

## Description

La présente invention consiste en un nouveau procédé de fabrication de granules d'argile expansée et concerne également les granules obtenus par la mise en oeuvre de ce procédé.

L'argile expansée est utilisée depuis de nombreuses années, sous forme de granulats légers, dans les activités du bâtiment et des travaux publics (BTP), notamment pour l'allégement des bétons. Ce matériau offre de nombreux avantages : il est naturel, solide, isolant, régulier, incombustible, facile à mettre en oeuvre, stable, chimiquement inerte, imputrescible et économique. En raison de ces nombreuses qualités, il est également largement employé dans d'autres domaines tels que l'isolation thermique, la décoration, la jardinerie, la culture hydroponique, l'incinération, le paysagisme, le compostage, la filtration, l'antipollution, l'aquariophilie, etc.

On situe la découverte de l'argile expansée vers 1885, mais c'est seulement en 1917 qu'est apparue la première installation industrielle de fabrication de ce matériau utilisant un four rotatif comme four d'expansion, réalisée par SJ HAYDE.

L'expansion est effectuée à une température d'environ 1100°C par un dégagement gazeux brutal au sein d'une masse argileuse plastique qui provoque la création de micro-bulles de gaz.

Les billes ou granules d'argile expansée obtenues ont une enveloppe vitrifiée et sont à la fois, très dures et très légères ; leur masse volumique est d'environ 300 à 630 kg/m³.

Leur technique de fabrication n'a pas sensiblement changé depuis l'apparition des premiers fours de cuisson et d'expansion, cette fabrication se fait encore actuellement par chauffage à haute température dans des fours rotatifs. L'énergie calorifique est créée par la combustion d'un combustible tel que gaz ou fuel.

Plusieurs étapes sont nécessaires pour l'obtention des billes ou granules expansés :
1°) préparation de l'argile dans des conditions techniques précises et parfaitement contrôlées (broyage, laminage, humidification) afin de confectionner des granules (granulation) ;
2°) séchage et stockage de ces granules ;
3°) cuisson de ceux-ci dans un premier four rotatif ;
4°) passage des granules d'argile cuits dans un deuxième four rotatif porté à 1100°C et régulé avec soin ; au sein de la masse argileuse rendue plastique par la haute température, un dégagement gazeux provoque l'alvéolage et donc l'expansion des granules argileux ;
5°) refroidissement de ces derniers par passage dans un tunnel de refroidissement.

Ces granules dont la forme est devenue sensiblement sphérique sont enfin criblés et distribués dans des cases de stockage bétonnées, afin d'éviter les souillures et les mélanges de différentes qualités.

Toutefois, cette technique de fabrication des granules d'argile expansée présente plusieurs inconvénients :
- les infrastructures utilisées sont très lourdes si l'on considère qu'elles comprennent deux ou trois fours en ligne ou en cascade entre l'entrée des granulats d'argile secs et la sortie des granules expansés vers un poste de criblage et de stockage ; ces infrastructures entraînent, d'autre part, des frais d'exploitation et de maintenance importants, notamment en raison du fait qu'elles comportent des parties mécaniques soumises à de hautes températures ;
- le rendement de ces installations est faible ; l'argile étant un matériau réfractaire, une grande partie de l'énergie de chauffage est perdue ; en outre, le procédé et les installations de chauffage actuels échauffent le matériau de l'extérieur vers l'intérieur. Cette mauvaise distribution de l'énergie calorifique entraîne une surconsommation d'énergie et la création de contraintes thermiques dans le matériau qui peuvent provoquer l'éclatement des granules ou billes d'argile et, par conséquent, une baisse de productivité.

Ces fours engendrent également des désagréments pour l'environnement (pollution sonore, olfactive et visuelle) dûs à leur mauvaise insonorisation et à leurs émanations (fumées). Ils peuvent également présenter un danger pour leur environnement proche ( personnels et visiteurs) en cas de mauvaise isolation acoustique ou d'isolation thermique défaillante. Ils nécessitent, en outre, des stockages de combustibles.
- temps de mise en chauffe des fours importants ;
- régulation difficile.

Il doit être souligné également que selon l'exposition des granules par rapport aux brûleurs des fours rotatifs de chauffage, leur expansion est plus ou moins complète, de sorte que le rendement de cette technique de fabrication est aléatoire et les qualités de granules d'argile expansée obtenues très variables.

Dans le document FR-2.101.602A, est décrit un procédé pour expanser la vermiculite consistant à irradier celle-ci avec une onde électromagnétique ayant une fréquence comprise entre 1 mégacycle par seconde et 10000 mégacycles par seconde, notamment pour des applications aux matériaux calorifuges ou de garnissage. Toutefois, les faibles caractéristiques mécaniques de la vermiculite expansée ne permettent pas son utilisation dans les applications exigeant des qualités de résistance mécanique élevée telles que la fabrication des bétons légers dans le bâtiment. En outre, les processus d'expansion de la vermiculite et de l'argile sont différents. Pour la vermiculite, l'expansion est due uniquement à la vaporisation de l'eau interfoliaire qui provoque l'écartement des feuilles constituant le matériau, lequel acquiert sa forme caractéristique en accordéon ou vermicules.

Le processus d'expansion de l'argile est différent : l'élévation de l'argile à de haute températures provoque des dégagements gazeux qui sont à l'origine de l'apparition de pores millimétriques à l'intérieur du matériau thermoplastique.

Ces dégagements gazeux sont produits par plusieurs réactions chimiques :
- décomposition de minéraux accessoires (sulfates, sulfures, etc.)
- combustion de matières organiques (carbone, acides humiques, ajouts hydrocarbonés, etc.)
- craquage de ces matières organiques ;
- réactions d'oxydo-réduction entre ces matières organiques et les oxydes de fer.

Les granules obtenus sont très résistants.

La présente invention a notamment pour but de remédier aux inconvénients susmentionnés des procédés et installations actuels de fabrication des granules d'argile expansée.

Selon l'invention, cet objectif est atteint grâce à un procédé suivant lequel l'expansion des granules d'argile est obtenue en soumettant lesdits granules d'argile à un chauffage par rayonnement micro-ondes.

Ce procédé d'expansion utilise le principe de l'échauffement des produits diélectriques au moyen d'un rayonnement micro-ondes. Ce principe repose sur l'interaction matière-rayonnement due à un champ électromagnétique très haute fréquence (micro-ondes). La matière (l'argile dans le cas présent), dans sa forme condensée, est composée d'atomes et de molécules appelés "clusters". Ces clusters, lorsqu'ils sont soumis à un champ électrique, sont mis en mouvement relatif dont l'intensité dépend de leur permittivité. Ce mouvement crée des frictions entre clusters qui sont à l'origine d'un chauffage interne du produit.

Appliqué à des billes ou granules d'argile, le rayonnement micro-ondes provoque un échauffement rapide et homogène de ceux-ci, l'onde électromagnétique chauffant directement l'intérieur desdits granules, cet échauffement provoque, en premier lieu, une vaporisation de l'eau, puis génère un dégagement gazeux qui provoque l'alvéolage et l'expansion de l'argile.

Le procédé selon l'invention peut être mis en oeuvre à l'aide d'installations très simples comprenant principalement un générateur d'énergie électromagnétique à très haute fréquence (magnétron), un applicateur et un guide d'ondes.

En outre, ces installations peuvent être facilement adaptées pour pouvoir réaliser successivement ou simultanément, au moyen d'un rayonnement micro-ondes : le séchage des granules ou billes d'argile et le chauffage et l'expansion de celles-ci.

Le procédé selon l'invention procure plusieurs avantages intéressants :
- les infrastructures nécessaires à sa mise en oeuvre peuvent être très légères ; l'encombrement du matériel utilisable pour cette mise en oeuvre est très inférieur à celui des installations actuelles de chauffage par fours rotatifs utilisant des combustibles liquides ou gazeux. En outre, la source de chaleur étant due à une excitation ciblée de l'argile, les conditions d'exploitation et de maintenance des matériels sont très bonnes.
- le rendement de ce procédé est très supérieur à celui des procédés de chauffage au moyen de combustibles liquides, gazeux ou solides ; une grande partie de la puissance est absorbée par le matériau (granules d'argile), de sorte que les pertes calorifiques sont très réduites ;
- l'argile est chauffée dans la masse, ce qui minimise les contraintes thermiques dans le matériau et les risques d'éclatement des granules d'argile expansée, de sorte que le pourcentage de produit défectueux est très réduit ou quasiment nul ;
- la montée en température d'un tel four micro-ondes est très rapide et l'expansion est directe, d'où une absence d'inertie (mise à disposition quasi immédiate de l'énergie) ;
- les étapes de séchage, cuisson et expansion peuvent être regroupées en une seule phase, ce qui permet d'obtenir un gain de temps et d'espace.

Le procédé objet de l'invention procure encore les avantages supplémentaires suivants liés à l'utilisation d'un rayonnement micro-ondes :
- aucune pollution sonore ni visuelle (ni bruit, ni fumée) ;
- une sécurité améliorée (pas de parois brûlantes) ;
- une possibilité de contrôle précis des paramètres de chauffe et d'expansion et une facilité de réglage du four ;
- un rendement très important (55 à 60 %) ;
- une meilleure productivité due à l'amélioration de la diffusion de la chauffe ;
- un bilan d'énergie correct ;
- un caractère économique.
   Ce procédé apporte une grande souplesse d'emploi et la possibilité de régler efficacement les procédés techniques par des moyens électriques, à l'aide d'automatismes rapides et précis ou d'une régulation.
   Les buts, caractéristiques et avantages ci-dessus et d'autres encore, ressortiront mieux de la description qui suit et des dessins annexés dans lesquels
- la figure 1 est un schéma synoptique de la production de granules d'argile expansée incluant un premier mode de mise en oeuvre du procédé selon l'invention ;
- la figure 2 est un schéma synoptique de la production de granules d'argile expansée incluant un deuxième mode de mise en oeuvre du procédé de l'invention ;
- la figure 3 est une vue schématique d'une installation de fabrication des granules d'argile expansée selon l'invention.

On se reporte auxdits dessins pour décrire des exemples de mises en oeuvre avantageuses, quoique nullement limitatives du procédé de fabrication de granules d'argile expansés selon l'invention.

La fabrication de granules d'argile expansée nécessite, comme matériau de base, de l'argile pure provenant de carrière d'argile ou de l'argile de recyclage par valorisation de boue de lavage de carrière, ou d'autres industries. De façon connue en soi, la granulation de l'argile est possible par broyage, laminage ou extrusion, puis les granules d'argile sont soumis à l'étape caractéristique susmentionnée du procédé de l'invention afin d'obtenir de façon préférentielle des granules d'argile expansée, de granulométrie par exemple comprise entre 0 et 25 mm pour une masse volumique apparente de 300 à 630 kg/m³.

Le cas échéant, l'argile est amenée à l'état plastique en y incorporant une petite quantité d'eau, avant laminage ou extrusion et, de manière avantageuse, on incorpore également à l'argile une faible quantité d'un hydrocarbure tel que fuel, avant granulation et, surtout, avant mise en oeuvre de l'étape de chauffage destinée à provoquer l'expansion de la matière, ces incorporations s'opérant par tout procédé et matériel connus en soi.

Avant exposition au rayonnement micro-ondes, les granules ou billes d'argile présentent ainsi un pourcentage d'humidité, qui peut être compris, par exemple, entre 10 % et 50 %.

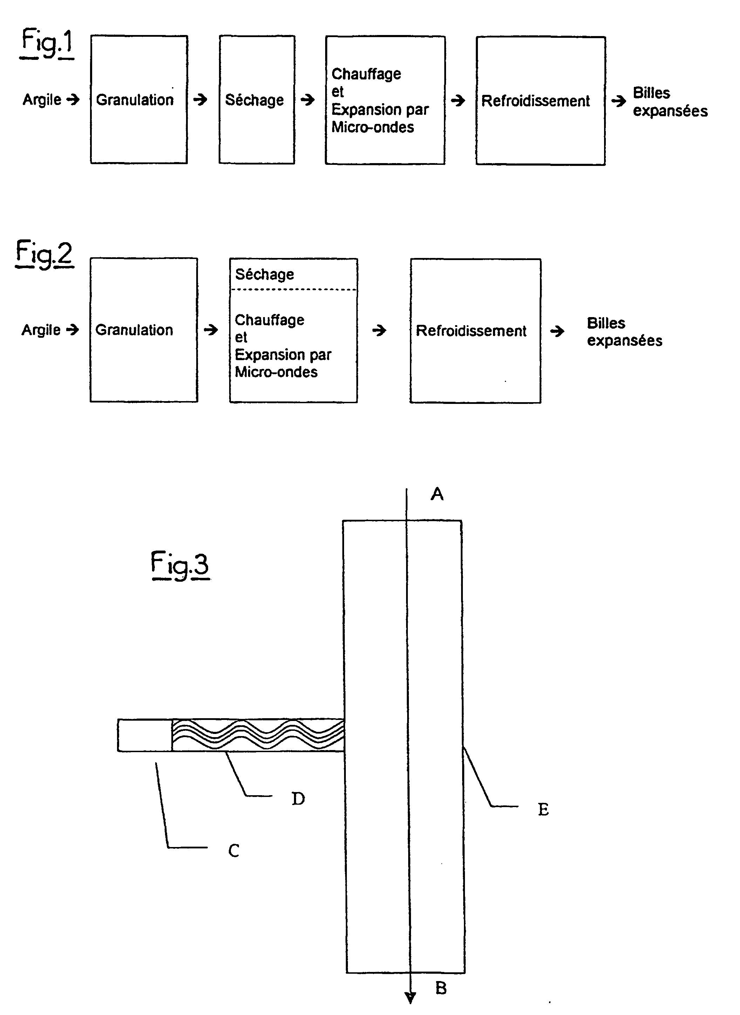

Selon un premier exemple de mise en oeuvre du procédé de l'invention (figure 1), l'argile, après granulation et séchage par des procédés classiques, est introduite dans un four à micro-ondes dans lequel les granules d'argile sont soumis à un rayonnement micro-ondes, provoquant l'échauffement et l'expansion de l'argile. A la sortie du four à micro-ondes, les granules ou billes d'argiles expansée sont refroidies par passage dans un tunnel refroidisseur ou à l'air libre.

De manière connue, elles peuvent ensuite faire l'objet d'une opération de criblage avant stockage ou expédition.

Suivant un deuxième exemple de mise en oeuvre du procédé de l'invention (figure 2), l'argile, après granulation, est introduite dans un four à micro-ondes dans lequel les granules d'argile sont exposés à un rayonnement micro-ondes, provoquant, à la fois, le séchage, le chauffage et l'expansion de l'argile.

A titre de simple exemple, le rayonnement micro-ondes utilisé peut être un rayonnement dont la fréquence est de l'ordre de 2450 MHz et la longueur d'onde de l'ordre de 0,1 nm, permettant de générer des températures de l'ordre de 1850°C.

L'installation micro-ondes utilisée pour la mise en oeuvre du procédé de l'invention comprend (figure 3), de manière connue en soi, un ou plusieurs générateurs ou sources micro-ondes (magnétron) C transformant l'énergie électrique du réseau en énergie micro-ondes, un applicateur E permettant l'échauffement "au défilé" ou en continu des granules d'argile sous micro-ondes, et un ou plusieurs guides d'ondes D véhiculant l'énergie micro-ondes, du ou des générateurs C à l'applicateur E.

L'applicateur E est constitué par un tunnel micro-ondes muni de sas étanches aux fuites micro-ondes à ses extrémités opposées, permettant respectivement, l'entrée des granules d'argile (référence A) et la sortie des granules d'argile expansée (référence B).

## Revendications

1. Procédé de fabrication de granules d'argile expansée, **caractérisé en ce que** l'expansion des granules d'argile est obtenue par chauffage de ces derniers au moyen d'un rayonnement micro-ondes.

2. Procédé de fabrication de granules d'argile expansée selon la revendication 1, **caractérisé en ce que** les granules d'argile sont séchés par un procédé classique avant d'être exposés au rayonnement micro-ondes assurant leur expansion.

3. Procédé de fabrication de granules d'argile expansée selon la revendication 1, **caractérisé en ce que** les granules d'argile sont successivement ou simultanément séchés et chauffés par exposition à un rayonnement micro-ondes assurant à la fois leur séchage et leur expansion.

4. Procédé de fabrication de granules d'argile expansée selon la revendication 2, **caractérisé en ce que** l'expansion des granules d'argile est opérée en continu dans un applicateur (E) constitué par un tunnel micro-ondes.

5. Procédé de fabrication de granules d'argile expansée selon la revendication 3, **caractérisé en ce que** le séchage et l'expansion des granules d'argile sont opérés en continu, dans un applicateur (E) constitué par un tunnel micro-ondes.

6. Procédé de fabrication de granules d'argile expansée, suivant l'une quelconque des revendications 1 à 5, **caractérisé en ce que** l'on incorpore une faible quantité d'hydrocarbure à l'argile avant granulation de celle-ci.

7. Granules d'argile expansée, **caractérisés en ce qu'**ils sont obtenus selon le procédé de l'une quelconque des revendications 1 à 6.

## Patentansprüche

1. Verfahren zur Herstellung von Blähtongranulat, **dadurch gekennzeichnet, dass** das Aufblähen des Tongranulats durch Erhitzen des letzteren mittels Mikrowellenbestrahlung erreicht wird.

2. Verfahren zur Herstellung von Blähtongranulat nach Anspruch 1, **dadurch gekennzeichnet, dass** das Tongranulat mittels eines herkömmlichen Verfahrens getrocknet wird, bevor es der Mikrowellenbestrahlung ausgesetzt wird, die dessen Aufblähen sicherstellt.

3. Verfahren zur Herstellung von Blähtongranulat nach Anspruch 1, **dadurch gekennzeichnet, dass** das Tongranulat nacheinander oder gleichzeitig erhitzt und getrocknet wird, indem es einer Mikrowellenbestrahlung ausgesetzt wird, die sowohl dessen Trocknen als auch dessen Aufblähen sicherstellt.

4. Verfahren zur Herstellung von Blähtongranulat nach Anspruch 2, **dadurch gekennzeichnet, dass** das Aufblähen des Tongranulats kontinuierlich in einem Applikator (E) stattfindet, der aus einem Mikrowellentunnel besteht.

5. Verfahren zur Herstellung von Blähtongranulat nach Anspruch 3, **dadurch gekennzeichnet, dass** das Trocknen und Aufblähen des Tongranulats kontinuierlich in einem Applikator (E) stattfindet, der aus einem Mikrowellentunnel besteht.

6. Verfahren zur Herstellung von Blähtongranulat nach einem der Ansprüche 1 bis 5, **dadurch gekennzeichnet, dass** dem Ton vor dessen Granulation eine geringe Menge Kohlenwasserstoff hinzugefügt wird.

7. Blähtongranulat, **dadurch gekennzeichnet, dass** es gemäß dem Verfahren nach einem der Ansprüche 1 bis 6 erhalten wird.

## Claims

1. Method for production of expanded clay granules, **characterised in that** the expansion of the clay granules is obtained by heating the latter by means of microwave radiation.

2. Method for production of expanded clay granules according to claim 1, **characterised in that** the clay granules are dried by a conventional method before being exposed to the microwave radiation which assures their expansion.

3. Method for production of expanded clay granules according to claim 1, **characterised in that** the clay granules are successively or simultaneously dried and heated by exposure to microwave radiation which assures both their drying and expansion.

4. Method for production of expanded clay granules according to claim 2, **characterised in that** the expansion of the clay granules is carried out continuously in an applicator (E) constituted by a microwave tunnel.

5. Method for production of expanded clay granules according to claim 3, **characterised in that** the drying and expansion of the clay granules is carried out continuously in an applicator (E) constituted by a microwave tunnel.

6. Method for production of expanded clay granules according to any one of claims 1 to 5, **characterised in that** a small quantity of hydrocarbon is incorporated with the clay before the latter is granulated.

7. Expanded clay granules, **characterised in that** they are obtained according to the method of any one of claims 1 to 6.
